# EUROPÄISCHE PATENTSCHRIFT

(11) **EP 1 686 046 B1**
(45) Veröffentlichungstag und Bekanntmachung des Hinweises auf die Patenterteilung: **05.12.2007**
(21) Anmeldenummer: 05001660.9
(22) Anmeldetag: 27.01.2005
(51) Int. Cl.: B62D 53/08

(54) **Sebstfahrendes Rangierfahrzeug für einen Sattelanhänger**
Self-propelled handling trolley for a semitrailer
Chariot de manutention automotrice pour semi remorque

(43) Veröffentlichungstag der Anmeldung: 02.08.2006
(73) Patentinhaber: Nester, Martin, 72160 Horb-Bildechingen (DE)
(72) Erfinder: Nester, Martin, 72160 Horb-Bildechingen (DE)
(74) Vertreter: Späth, Dieter

(56) Entgegenhaltungen:
- EP-A- 0 074 236
- US-A- 3 612 312
- US-A- 3 924 701
- US-A- 4 629 020
- PATENT ABSTRACTS OF JAPAN Bd. 008, Nr. 120 (M-300), 6. Juni 1984 (1984-06-06) & JP 59 026375 A (KENJI OKUJIMA), 10. Februar 1984 (1984-02-10)

## Beschreibung

Die Erfindung betrifft ein selbstfahrendes Rangierfahrzeug für einen Sattelanhänger mit einer Sattelschlepperkupplung für den Sattelanhänger. Bei der Sattelschlepperkupplung handelt es sich um eine herkömmliche Anhängerkupplung für Sattelanhänger, die üblicherweise eine Auflageplatte mit einer Zapfenaufnahme zum lösbaren Verbinden eines Zapfens des Sattelanhängers in ihrer Mitte aufweist.

In unbefestigtem und steilem Gelände, beispielsweise auf Baustellen, ist das Rangieren eines Sattelanhängers eines Lastkraftwagens mit der üblichen Sattelzugmaschine, die für den Straßenverkehr konzipiert ist, problematisch. Oftmals reicht die Zug- oder Schubkraft der Sattelzugmaschine nicht aus, so dass der die Sattelzugmaschine mit dem angekuppelten Sattelanhänger umfassende Sattelzug stecken bleibt. Ein weiteres Problem ist eine Überbeanspruchung einer Motor- und Getriebekupplung der Zugmaschine, die für derartige Belastungen nicht ausgelegt ist. Mit Motor- und Getriebekupplung ist die üblicherweise zwischen einem Verbrennungsmotor und einem Getriebe der Sattelzugmaschine angeordnete Kupplung gemeint, die ein Antriebsdrehmoment des Verbrennungsmotors auf das Getriebe überträgt und die zum Anfahren notwendig ist.

Aus der US-A-3 924 701 ist ein Ketten-Rangierfahrzeug zum Rangieren von Wohnanhängern bekannt. Es weist für jede Kette einen Elektromotor zum Anschluss an das Wechselstromnetz und eine Kabelfernbedienung auf. Das bekannte Rangierfahrzeug ist ungeeignet zum Rangieren von Sattelanhängern, es ist dafür zu klein und zu leicht. Außerdem ist es auf das Wechselstromnetz angewiesen.

Der Erfindung liegt daher die Aufgabe zu Grunde, ein selbstfahrendes Rangierfahrzeug zum Rangieren eines Sattelanhängers auch in unbefestigtem und/oder steilem Gelände vorzuschlagen.

Diese Aufgabe wird erfindungsgemäß dadurch gelöst, dass das selbstfahrende Rangierfahrzeug eine Fernsteuerung aufweist, mit der es von einer Bedienperson lenk- und fahrbar ist. Eine Funkfernsteuerung ist möglich aber nicht notwendig, eine Kabelfernsteuerung oder dgl. ist ebenso möglich. Das erfindungsgemäße Rangierfahrzeug ist insbesondere für Schritttempo ausgelegt, und es ist vorgesehen, dass die Bedienperson beim Rangieren mit dem Rangierfahrzeug und dem angekuppelten Sattelanhänger zu Fuß mitgeht. Durch die Fernsteuerung kann die Bedienperson an oder zu einer Stelle beim Rangierfahrzeug oder dem Sattelanhänger gehen, von der aus sie das Rangieren gut beobachten kann. Das Rangieren ist dadurch vereinfacht. Vorzugsweise weist das Rangierfahrzeug einen engen Wendekreis auf und/oder ist auf der Stelle drehbar. Das ist möglich beispielsweise durch gegenläufigen Antrieb von Fahrzeugrädern auf beiden Seiten des Rangierfahrzeugs oder durch eine Drehbarkeit eines Teils oder aller Räder des Rangierfahrzeugs um gedachte Hochachsen. Das Rangieren des Sattelanhängers auf engem Raum ist dadurch erleichtert.

Des Weiteren weist das erfindungsgemäße Rangierfahrzeug eine Druckluftversorgung für den Sattelanhänger auf. Die Druckluftversorgung umfasst einen Druckluftkompressor oder -verdichter. Mit der Druckluftversorgung können die Druckluftbremsen des Sattelanhängers gelöst werden, um den Sattelanhänger rangieren zu können. Es ist heutzutage üblich, dass die Bremsen von Anhängern von Lastkraftwagen, also auch von Sattelanhängern, federbetätigt zuspannen und durch Druckluft gelöst werden. Zum Lösen der Bremsen ist eine Druckluftversorgung notwendig. Bei älteren Anhängern, deren Bremsen noch drucklos gelöst sind und mit Druckluft betätigt werden, kann der Sattelanhänger durch die Druckluftversorgung des erfindungsgemäßen Rangierfahrzeugs gebremst werden. Ein weiterer Vorteil der Druckluftversorgung ist die Möglichkeit, druckluftbetätigte Lenkachsen des Sattelanhängers beim Rangieren zu lenken.

Aus der US-A-4 629 020 ist ein Rangierfahrzeug bekannt mit einer Druckluftversorgung für einen Sattelanhänger.

Eine Ausgestaltung der Erfindung sieht eine Höhenverstelleinrichtung für die Satelschlepperkupplung vor, mit der eine Höhe der Sattelschlepperkupplung einstellbar ist. Vorzugsweise ist die Höhenverstelleinrichtung in ihrer jeweiligen Stellung feststellbar. Dadurch können Sattelanhänger mit unterschiedlichen Aufsattelhöhen angekuppelt werden, also außer Sattelanhängern mit bisher üblicher Aufsattelhöhe auch Niederflur-Sattelanhänger ("Lowdock"-Sattelanhänger) mit niedrigerer Pritschen- und Aufsattelhöhe. Weiterer Vorteil der Höhenverstellbarkeit der Sattelschlepperkupplung ist, dass durch Anheben oder Absenken eine vordere von mehreren Hinterachsen des Sattelanhängers ent- oder belastet und eine hintere von mehreren Hinterachsen be- oder entlastet werden kann. Dadurch kann eine Wendigkeit des Sattelanhängers erhöht werden, insbesondere wenn der Sattelanhänger eine Lenkachse aufweist, die belastet wird, und eine nicht lenkbare Achse aufweist, die entlastet wird. Auch beim Überfahren einer Bodenwelle oder einer Bodenmulde kann das Anheben oder Absenken des Sattelanhängers an der Sattelschlepperkupplung, also vorn, nützlich sein.

Zusätzlich zu der Sattelschlepperkupplung kann das erfindungsgemäße Rangierfahrzeug eine Anhängerkupplung für einen Deichselanhänger aufweisen, so dass auch ein normaler, eine Deichsel aufweisender Anhänger rangierbar ist.

Eine weitere Ausgestaltung der Erfindung sieht vor, dass das Rangierfahrzeug keine nach oben über die Anhängerkupplung überstehenden Teile aufweist, so dass das Rangierfahrzeug unter dem aufliegenden Sattelanhänger drehbar ist, ohne am Sattelanhänger anzustoßen. Das Rangierfahrzeug kann dadurch beispielsweise quer zum Sattelanhänger gedreht werden, so dass ein enger Wendekreis des Sattelanhängers möglich ist.

Zur Erzielung einer hohen Zug- oder Schubkraft sieht eine Ausgestaltung der Erfindung ein Kettenfahrzeug nach Art einer Raupe als Rangierfahrzeug vor. Die auf den Untergrund übertragbare Antriebskraft ist gegenüber beispielsweise einer Gummibereifung wesentlich erhöht. Um das Rangierfahrzeug auch auf asphaltierten Wegen und Straßen benutzen zu können, können mit Hartgummi belegte Kettenglieder für die Ketten des Rangierfahrzeugs verwendet werden.

Vorzugsweise weist das Rangierfahrzeug einen hydraulischen Antrieb, also beispielsweise einen oder mehrere Hydromotoren auf. Ein hydraulischer Antrieb ist kompaktbauend, er ermöglicht große Momente bei kleinem Motorvolumen, und es ist möglich, an jedem Rad des Rangierfahrzeugs oder an jedem Kettenantriebsrad einer Kette des Rangierfahrzeugs einen Hydromotor vorzusehen. Dies ermöglicht in einfacher Weise einen Einzelradantrieb und ein Lenken durch unterschiedliche Rad- oder Kettengeschwindigkeiten auf beiden Seiten des Rangierfahrzeugs oder auch einen gegenläufigen Rad- oder Kettenantrieb zum Wenden des Rangierfahrzeugs auf der Stelle. Weiterer Vorteil eines hydraulischen Antriebs ist der Entfall einer Anfahrkupplung, der Hydromotor arbeitet nahezu verschleißfrei und wird durch ständiges Anfahren und Anhalten nicht überbeansprucht. Denkbar ist auch ein elektromotorischer Antrieb, der in prinzipiell gleicher Weise wie ein hydraulischer Antrieb an jedem Rad oder an jedem Kettenantriebsrad vorgesehen werden kann und ebenfalls verschleißfrei anfährt. Ein pneumatischer Antrieb scheint weniger geeignet. Ebenfalls scheint ein Antrieb mit Verbrennungsmotor weniger geeignet wegen des notwendigen Getriebes, der Anfahrkupplung und der Verteilung des Drehmoments auf mehrere angetriebene Räder des Rangierfahrzeugs. Trotzdem sollen auch solche Antriebe nicht von der Erfindung ausgeschlossen sein.

Das erfindungsgemäße Rangierfahrzeug kann nach Art eines Fahrgestells eines Baggers ausgebildet sein.

Auch wenn eine Energieversorgung des Rangierfahrzeugs mit beispielsweise einem eigenen Verbrennungsmotor möglich ist, sieht eine Ausgestaltung der Erfindung eine Fremdenergieversorgung des Rangierfahrzeugs mit einem Energieversorgungsfahrzeug vor. Das Energieversorgungsfahrzeug weist beispielsweise ein Stromaggregat, d. h. einen Generator und einen Verbrennungsmotor zu dessen Antrieb auf. Das Rangierfahrzeug lässt sich so niedrig bauen, dass es unter einen Sattelanhänger passt, und es lässt sich kurz bauen, so dass es wendig ist. Es ist eine Länge des Rangierfahrzeugs möglich, die etwa einer Breite des Sattelanhängers entspricht.

Das Energieversorgungsfahrzeug kann ein Anhänger mit Anhängerkupplung zum Anhängen an das Rangierfahrzeug und/oder an den Sattelanhänger sein. Es ist möglich, das als Anhänger ausgebildete Energieversorgungsfahrzeug zu ziehen oder zu schieben. Ein geschobenes, als Anhänger ausgebildetes Energieversorgungsfahrzeug sollte lenkbar sein.

Eine Ausgestaltung der Erfindung sieht vor, dass das Energieversorgungsfahrzeug selbstfahrend ist. Es wird in einem Abstand vom Rangierfahrzeug bewegt, der eine Energieversorgung des Rangierfahrzeugs über Energieversorgungsleitungen möglich macht. Vorzugsweise weist das Energieversorgungsfahrzeug, wenn es selbstfahrend ist, eine Fernsteuerung auf. Diese kann von der gehenden Bedienperson des Rangierfahrzeugs mitbedient sein. Es ist auch eine selbsttätige, insbesondere computergesteuerte Fernsteuerung des Energieversorgungsfahrzeugs möglich, die das Energieversorgungsfahrzeug in einer Spur mit dem Rangierfahrzeug bzw. dem Sattelanhänger vor oder hinter dem Rangierfahrzeug oder dem Sattelanhänger steuert.

In bevorzugter Ausgestaltung der Erfindung weist der Sattelanhänger eine Lenkachse auf. Lenkachsen, die üblicherweise druckluftgesteuert bzw. -gelenkt sind, sind an sich bekannt. Eine Lenkachse des Sattelanhängers macht den den Sattelanhänger und das Rangierfahrzeug umfassenden Sattelzug wendiger, der Sattelzug lässt sich auf engerem Raum und einfacher rangieren. Die Lenkachse des Sattelanhängers ist vorzugsweise ferngesteuert, sie kann wie das Rangierfahrzeug von einer gehenden Bedienperson ferngelenkt werden. Auch hier ist eine automatische, insbesondere computergesteuerte Lenkung möglich.

Eine Energieversorgung der Lenkachse, insbesondere also eine Druckluftversorgung, erfolgt vom Rangierfahrzeug.

Vorzugsweise weist das erfindungsgemäße Rangierfahrzeug eine Hydropumpe zur Energieversorgung seines hydraulischen Antriebs und einen Elektromotor, der den Hydromotor und die Druckluftversorgung antreibt, auf. Strom erhält der Elektromotor des Rangierfahrzeugs vom Stromaggregat seines Energieversorgungsfahrzeugs.

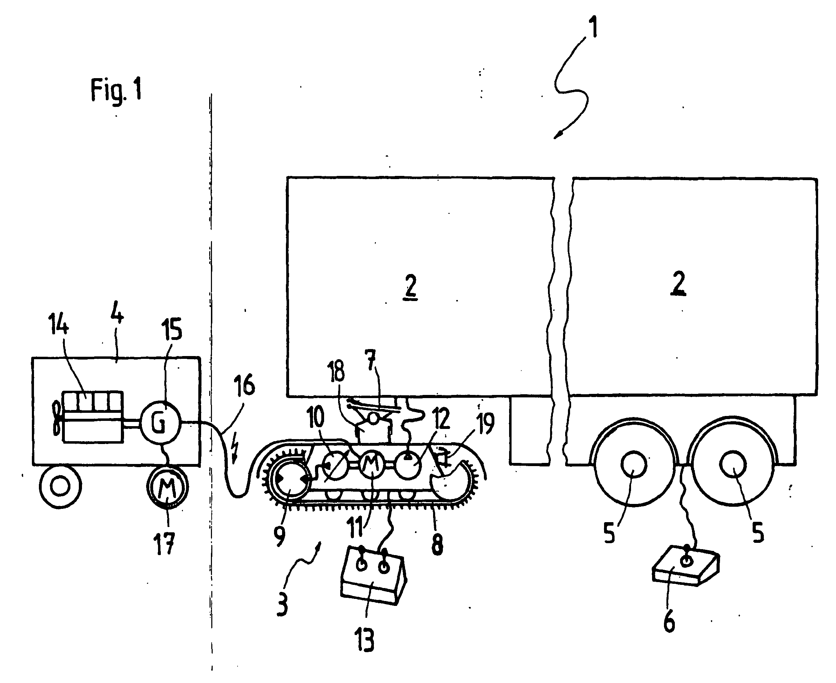

Die Erfindung wird nachfolgend anhand eines Ausführungsbeispiels näher erläutert. Die einzige Figur zeigt eine vereinfachte Schemadarstellung eines erfindungsgemäßen Rangierfahrzeugs.

Die Zeichnung zeigt einen Sattelzug 1 mit einem Sattelanhänger 2 eines Lastkraftwagens, einem erfindungsgemäßen Rangierfahrzeug 3 und einem ebenfalls erfindungsgemäßen Energieversorgungsfahrzeug 4. Der Sattelanhänger 2 ist ein Sattelanhänger 2 eines Lastkraftwagens. Er weist druckluftgesteuerte/druckluftgelenkte Lenkachsen 5 auf, die mit einer Fernsteuerung 6 steuer- bzw. lenkbar sind. Die Fernsteuerung 6 kann eine Funkfernsteuerung sein, im dargestellten und beschriebenen Ausführungsbeispiel der Erfindung ist es eine Kabelfernsteuerung. Die Fernsteuerung 6 ermöglicht es einer nicht dargestellten, neben dem Sattelzug 1 stehenden oder mit dem Sattelzug 1 mitgehenden Bedienperson, die Lenkachsen 5 des Sattelanhängers 2 zu lenken.

Der Sattelanhänger 2 ist an das Rangierfahrzeug 3 angehängt, das eine Sattelschlepperkupplung 7 auf seiner Oberseite aufweist. Das Rangierfahrzeug 3 ist so niedrig, dass es unter den Sattelanhänger 2 fahrbar ist. Die Sattelschlepperkupplung 7 bildet eine höchste Stelle des Rangierfahrzeugs 3, das Rangierfahrzeug 3 weist keine Teile auf, die nach oben über die Sattelschlepperkupplung 7 überstehen. Das Rangierfahrzeug 3 ist dadurch unter dem Sattelanhänger 2 beliebig drehbar, ohne am Sattelanhänger 2 anzustoßen. Das Rangierfahrzeug 3 kann dadurch in beliebige. Richtungen in Bezug auf den Sattelanhänger 2 gedreht werden.

Durch eine Höhenverstelleinrichtung 18 ist eine Höhe der Sattelschlepperkupplung 7 verstell- und einstellbar. Die Höhenverstelleinrichtung 18 kann beispielsweise einen Druckluftzylinder wie dargestellt oder einen Hydraulikzylinder aufweisen. Auch andere Höhenverstelleinrichtungen beispielsweise elektromechanischer Art sind möglich (nicht dargestellt). Vorzugsweise ist die Höhenverstelleinrichtung 18 beispielsweise mit einer Klemm- oder einer lösbaren Rasteinrichtung in ihrer jeweiligen Stellung feststellbar. Die Höhenverstelleinrichtung 18 ermöglicht eine Höhenanpassung an den Sattelanhänger 2, so dass außer einem Sattelanhänger 2 mit üblicher Aufsattelhöhe auch ein sog. "Lowdock"-Sattelanhänger mit niedrigerer Aufsattelhöhe an das Rangierfahrzeug 3 ankuppelbar bzw. anhängbar ist. Außerdem lässt sich zum besseren Rangieren oder zum Überfahren von Bodenwellen oder Bodenmulden der Sattelanhänger 2 vom anheben oder absenken und dadurch eine der Hinterachsen 5 des Sattelanhängers 2 be- und die andere Hinterachse 5 entlasten.

Zusätzlich zur Sattelschlepperkupplung 7 weist das Rangierfahrzeug 3 eine Anhängerkupplung 19 für einen nicht dargestellten Deichselanhänger auf. Dadurch können auch Lastkraftwagenanhänger mit Deichsel (nicht dargestellt) mit dem Rangierfahrzeug 3 bewegt und rangiert werden.

Das Rangierfahrzeug 3 ist ein selbstfahrendes Kettenfahrzeug, also eine Art Raupe. Es kann nach Art eines Fahrgestells eines Baggers ausgebildet sein. Kettenglieder der Ketten 8 sind mit Hartgummiplatten belegt, damit das Rangierfahrzeug 3 auf asphaltierten Flächen bewegt werden kann, ohne sie zu zerstören.

Zum Antrieb weist das Rangierfahrzeug 3 für jede seiner beiden Ketten 8 jeweils einen Hydromotor 9 auf, der ein Kettenantriebsrad jeweils einer der beiden Ketten 8 antreibt. Die beiden Hydromotoren 9 sind umsteuerbar, d. h. in beiden Drehrichtungen antreibbar, was in der Symboldarstellung der Hydromotoren 9 durch die beiden Pfeilspitzen dargestellt ist. Zur Öldruckversorgung der Hydromotoren 9 weist das Rangierfahrzeug 3 eine gemeinsame Hydropumpe 10 mit verstellbarer Fördermenge auf. Die Hydropumpe 10 und die Hydromotoren 9 bilden ein hydraulisches Getriebe des Rangierfahrzeugs 3. Der Antrieb der Hydropumpe 10 erfolgt mit einem Elektromotor 11. Grundsätzlich kann auch der Elektromotor 11 drehzahlverstellbar sein. Magnetventile zur Steuerung der Hydromotoren 9, vorzugsweise Proportionalventile, sind in der Zeichnung nicht dargestellt. Außer der Hydropumpe 10 treibt der Elektromotor 11 einen Druckluftkompressor 12 oder -verdichter an. Der Druckluftkompressor 12 versorgt den Sattelanhänger 2 mit Druckluft zum Lösen seiner Bremsen und zum Steuern und Lenken seiner Lenkachsen 5.

Das Rangierfahrzeug 3 weist eine Fernsteuerung 13 auf, die eine Funkfernsteuerung sein kann. Im dargestellten und beschriebenen Ausführungsbeispiel der Erfindung ist die Fernsteuerung 13 eine Kabeifernsteuerung. Sie ermöglicht eine Bedienung des Rangierfahrzeugs 3 durch eine nicht dargestellte Bedienperson, die mit dem Sattelzug 1 mitgeht. Durch die Fernsteuerung 13 kann die Bedienperson beim Rangieren an eine Stelle beim Rangierfahrzeug 3 oder dem Sattelanhänger 2 gehen, von der aus sie das Rangieren gut beobachten kann.

Das Rangierfahrzeug 3 weist eine Fremdenergieversorgung durch das Energieversorgungsfahrzeug 4 auf. Das Energieversorgungsfahrzeug 4 weist einen Verbrennungsmotor 14 auf, der einen Stromgenerator 15 antreibt. Über ein Kabel 16 versorgt der Generator 15 den Elektromotor 11 des Rangierfahrzeugs 3 mit Strom.

Das Energieversorgungsfahrzeug 4 wird mit dem Sattelzug 1 mitbewegt, wobei sein Abstand variieren kann. Das Energieversorgungsfahrzeug 4 kann ein Anhänger sein, der an das Rangierfahrzeug 3 oder den Sattelanhänger 2 angehängt und gezogen oder geschoben wird (nicht dargestellt). Im Falle eines Schiebens sollte das Energieversorgungsfahrzeug 4 lenkbar sein. Im dargestellten und beschriebenen Ausführungsbeispiel der Erfindung ist das Energieversorgungsfahrzeug 4 selbstfahrend, es weist Elektroradnabenmotoren 17 für seine angetriebenen Fahrzeugräder auf, die ebenfalls vom Generator 15 mit Strom versorgt werden. Das dargestellte Energieversorgungsfahrzeug 4 ist gummibereift, es kann grundsätzlich ebenso wie das Rangierfahrzeug 3 ein Kettenfahrzeug sein (nicht dargestellt). Das Energieversorgungsfahrzeug 4 kann eine Fernsteuerung zur Bedienung durch eine Bedienperson aufweisen. Im dargestellten Ausführungsbeispiel weist das Energieversorgungsfahrzeug 4 bzw. das Rangierfahrzeug 3 eine automatische Steuerung mittels eines nicht dargestellten Computers auf, der das Energieversorgungsfahrzeug 4 in einem vorgegebenen Abstandsbereich und in einer Spur mit dem Rangierfahrzeug 3 und dem Sattelanhänger 2 mitbewegt. Dadurch ist keine eigene Bedienperson für das Energieversorgungsfahrzeug 4 erforderlich und das Energieversorgungsfahrzeug 4 nimmt nicht die Aufmerksamkeit der Bedienperson des Rangierfahrzeugs 3 in Anspruch.

Das Rangierfahrzeug 3 weist keinen Führerstand auf, es ist nicht vorgesehen, dass die Bedienperson mit dem Rangierfahrzeug 3 mitfährt. Die Bedienperson steht oder geht neben, vor oder hinter dem Sattelzug 1 her, so dass sie einen guten Überblick beim Rangieren des Sattelanhängers 2 hat.

Zum erfindungsgemäßen Rangieren wird der Sattelanhänger 2 an das Rangierfahrzeug 3 angekuppelt und von einer stehenden oder gehenden Bedienperson ferngesteuert rangiert. Eine weitere oder auch die gleiche Bedienperson steuert bzw. lenkt bei Bedarf die Lenkachsen 5 des Sattelanhängers 2. Auf diese Weise ist ein genaues Rangieren und ein Rangieren auf engem Raum möglich. Das Rangierfahrzeug 3 ist durch gegenläufigen Antrieb seiner Ketten 8 auf der Stelle drehbar und es kann quer zum Sattelanhänger 2 gestellt werden. Dadurch ist ein enger Wendekreis des Sattelanhängers 2 bzw. des Sattelzugs 1 und ein Rangieren auf engem Raum möglich. Das Rangierfahrzeug 3 ist zum Rangieren des Sattelanhängers 2 insbesondere auf steilem und/oder unbefestigtem-Gelände und/oder bei engen Platzverhältnissen gedacht, wo ein Rangieren mit einer herkömmlichen Sattelzugmaschine schwierig oder unmöglich ist. Beispielsweise ist das Rangierfahrzeug 3 zum Rangieren auf Baustellen insbesondere in Hanglage vorgesehen und vorteilhaft.

## Patentansprüche

1. Selbstfahrendes Rangierfahrzeug für einen Sattelanhänger, mit einer Sattelschlepperkupplung (7) für den Sattelanhänger (2), wobei das Rangierfahrzeug (3) eine Fernsteuerung (13) aufweist, **dadurch gekennzeichnet, dass** das Rangierfahrzeug (3) einen Druckluftkompressor (12) oder Druckluftverdichter aufweist, wobei der Druckluftkompressor (12) oder Druckluftverdichter den Sattelanhänger (2) mit Druckluft zum Lösen seiner Bremsen und zum Steuern und Lenken seiner Lenkachsen (5) versorgt.

2. Selbstfahrendes Rangierfahrzeug nach Anspruch 1, **dadurch gekennzeichnet, dass** das Rangierfahrzeug (3) eine Höhenverstelleinrichtung (18) für die Sattelschlepperkupplung (7) aufweist.

3. Selbstfahrendes Rangierfahrzeug nach Anspruch 1 oder 2, **dadurch gekennzeichnet, dass** das Rangierfahrzeug (3) keine nach oben über die Sattelschlepperkupplung (7) überstehenden Teile aufweist.

4. Selbstfahrendes Rangierfahrzeug nach einem der Ansprüche 1 bis 3, **dadurch gekennzeichnet, dass** das Rangierfahrzeug (3) ein Kettenfahrzeug ist.

5. Selbstfahrendes Rangierfahrzeug nach einem der Ansprüche 1 bis 4, **dadurch gekennzeichnet, dass** das Rangierfahrzeug (3) einen hydraulischen Antrieb (9) aufweist.

6. Selbstfahrendes Rangierfahrzeug nach einem der Ansprüche 1 bis 5, **dadurch gekennzeichnet, dass** das Rangierfahrzeug (3) ein Energieversorgungsfahrzeug (4) aufweist.

7. Selbstfahrendes Rangierfahrzeug nach Anspruch 6, **dadurch gekennzeichnet, dass** das Energieversorgungsfahrzeug (4) eine Anhängerkupplung zum Anhängen an das Rangierfahrzeug (3) und/oder den Sattelanhänger (2) aufweist.

8. Selbstfahrendes Rangierfahrzeug nach Anspruch 6, **dadurch gekennzeichnet, dass** das Energieversorgungsfahrzeug (4) selbstfahrend ist.

9. Selbstfahrendes Rangierfahrzeug nach einem der vorhergehenden Ansprüche, **dadurch gekennzeichnet, dass** der Sattelanhänger (2) eine Lenkachse (5) aufweist.

10. Selbstfahrendes Rangierfahrzeug nach Anspruch 5, **dadurch gekennzeichnet, dass** das Rangierfahrzeug (3) eine Hydropumpe (10) für seinen hydraulischen Antrieb (9) und einen Elektromotor (11) zum Antrieb der Hydropumpe (10) und der Druckluftversorgung (12) aufweist.

## Claims

1. Self-propelled manoeuvring vehicle for a semitrailer, said vehicle having a semitrailer coupling (7) for the semitrailer (2), the manoeuvring vehicle (3) having a remote control (13), **characterised in that** the manoeuvring vehicle (3) has a compressed-air compressor (12) or compressed-air condenser, the compressed-air compressor (12) or compressed-air condenser supplying the semitrailer (2) with compressed air to release its brakes and to control and steer its steering axles (5).

2. Self-propelled manoeuvring vehicle according to claim 1, **characterised in that** the manoeuvring vehicle (3) has a vertically adjusting mechanism (18) for the semitrailer coupling (7).

3. Self-propelled manoeuvring vehicle according to claim 1 or 2, **characterised in that** the manoeuvring vehicle (3) has no parts protruding upwardly beyond the semitrailer coupling (7).

4. Self-propelled manoeuvring vehicle according to one of claims 1 to 3, **characterised in that** the manoeuvring vehicle (3) is a vehicle fitted with chains.

5. Self-propelled manoeuvring vehicle according to one of claims 1 to 4, **characterised in that** the manoeuvring vehicle (3) has a hydraulic drive (9).

6. Self-propelled manoeuvring vehicle according to one of claims 1 to 5, **characterised in that** the manoeuvring vehicle (3) has an energy supply vehicle (4).

7. Self-propelled manoeuvring vehicle according to claim 6, **characterised in that** the energy supply vehicle (4) has a trailer coupling for attachment to the manoeuvring vehicle (3) and/or the semitrailer (2).

8. Self-propelled manoeuvring vehicle according to claim 6, **characterised in that** the energy supply vehicle (4) is self-propelled.

9. Self-propelled manoeuvring vehicle according to one of the preceding claims, **characterised in that** the semitrailer (2) has a steering axle (5).

10. Self-propelled manoeuvring vehicle according to claim 5, **characterised in that** the manoeuvring vehicle (3) has a hydraulic pump (10) for its hydraulic drive (9) and an electric motor (11) for driving the hydraulic pump (10) and the compressed-air supply means (12).

## Revendications

1. Véhicule de manoeuvre automoteur pour une semi-remorque, comprenant un attelage de semi-remorque (7) pour la semi-remorque (2), le véhicule de manoeuvre (3) présentant une télécommande (13), **caractérisé en ce que** le véhicule de manoeuvre (3) est équipé d'un compresseur pneumatique (12), le compresseur pneumatique (12) alimentant la semi-remorque (2) en air comprimé pour en desserrer ses freins et pour en commander et guider ses essieux directeurs (5).

2. Véhicule de manoeuvre automoteur selon la revendication 1, **caractérisé en ce que** le véhicule de manoeuvre (3) présente un dispositif de réglage en hauteur (18) pour l'attelage de semi-remorque (7).

3. Véhicule de manoeuvre automoteur selon la revendication 1 ou 2, **caractérisé en ce que** le véhicule de manoeuvre (3) ne présente pas de pièces dépassant du haut de l'attelage de semi-remorque (7).

4. Véhicule de manoeuvre automoteur selon l'une des revendications 1 à 3, **caractérisé en ce que** le véhicule de manoeuvre (3) est un véhicule chenillé.

5. Véhicule de manoeuvre automoteur selon l'une des revendications 1 à 4, **caractérisé en ce que** le véhicule de manoeuvre (3) présente un entraînement hydraulique (9).

6. Véhicule de manoeuvre automoteur selon l'une des revendications 1 à 5, **caractérisé en ce que** le véhicule de manoeuvre (3) présente un véhicule d'alimentation en énergie (4).

7. Véhicule de manoeuvre automoteur selon la revendication 6, **caractérisé en ce que** le véhicule d'alimentation en énergie (4) présente un attelage de remorque destiné à l'atteler au véhicule de manoeuvre (3) et/ou à la semi-remorque (2).

8. Véhicule de manoeuvre automoteur selon la revendication 6, **caractérisé en ce que** le véhicule d'alimentation en énergie (4) est automoteur.

9. Véhicule de manoeuvre automoteur selon l'une des revendications précédentes, **caractérisé en ce que** la semi-remorque (2) présente un essieu directeur (5).

10. Véhicule de manoeuvre automoteur selon la revendication 5, **caractérisé en ce que** le véhicule de manoeuvre (3) présente une pompe hydraulique (10) pour son entraînement hydraulique (9) et un moteur électrique destiné à entraîner la pompe hydraulique (10) et l'alimentation en air comprimé (12).
